19 Europäisches Patentamt

European Patent Office

Office européen des brevets

11 Veröffentlichungsnummer: **0 447 652 B1**

## 12 EUROPÄISCHE PATENTSCHRIFT

45 Veröffentlichungstag der Patentschrift: **22.02.95**

21 Anmeldenummer: **90124687.6**

22 Anmeldetag: **19.12.90**

51 Int. Cl.6: **C08L 23/12**, C08J 5/18,
//(C08L23/12,33:10)

54 **Hochgleitfähige, gereckte Polypropylenfolien.**

30 Priorität: **01.03.90 DE 4006402**

43 Veröffentlichungstag der Anmeldung:
**25.09.91 Patentblatt 91/39**

45 Bekanntmachung des Hinweises auf die
Patenterteilung:
**22.02.95 Patentblatt 95/08**

84 Benannte Vertragsstaaten:
**BE CH DE ES FR GB IT LI NL**

56 Entgegenhaltungen:
**EP-A- 0 027 586**
**EP-A- 0 242 055**
**DE-A- 2 244 703**
**DE-A- 3 710 670**

**CHEMICAL ABSTRACTS, vol. 81, no. 8, 26.
August 1974, Columbus, Ohio, US; abstract
no. 38453K, T.OGAWA ET AL: 'polypropylene
film with improved blocking resistance' Seite 48 ;Spalte 2 ;**

73 Patentinhaber: **Wolff Walsrode Aktiengesellschaft
Postfach 15 15
D-29655 Walsrode (DE)**

72 Erfinder: **Schinkel, Ingo, Dipl.-Ing.
Witternstrasse 14
D-3030 Walsrode (DE)**
Erfinder: **Reiners, Ulrich, Dr.
Finkenstrasse 2
D-3044 Neuenkirchen (DE)**
Erfinder: **Krallmann, Anton, Dipl.-Ing.
Am Wiethop 15
D-3032 Fallingbostel (DE)**

74 Vertreter: **Braun, Rolf, Dr. et al
Bayer AG
Konzernverwaltung RP
Patentabteilung
D-51368 Leverkusen (DE)**

**Beschreibung**

Die vorliegende Erfindung betrifft eine mindestens monoaxial orientierte Polypropylenfolie mit verbessertem Antiblockverhalten.

Polypropylenfolien werden in größtem Umfang als Verpakkungsmaterialien verwendet. Sie werden aber auch für die Folienkaschierung in der grafischen Industrie verwendet, da sie vorteilhafte physikalische Eigenschaften besitzen. Probleme können sich auf schnellaufenden Verpackungs- und/oder Verarbeitungsmaschinen ergeben. Es ist deshalb schon bekannt, zur Verbesserung der entsprechenden Eigenschaffen Antistatika, Gleitmittel und insbesondere Blockmittel zu verwenden.

Als Antiblockmittel wird im weitesten Umfange fein verteiltes Siliciumdioxid verwendet, siehe EP-A-27 586 und EP-A-189 242. Aus der EP-A-242 055 ist bekannt, ein nicht schmelzendes vernetztes Silikon zur Verbesserung der Antiblockeigenschaften zu verwenden. Gemäß der DE-A-2 244 703 soll eine Verbesserung der Gleiteigenschaften von Polypropylenfolien durch Verwendung von thermoplastischen Polymeren wie Polyamid-6, Polyamid-6,6, Polyethylenterephthalat oder Polyethylenoxibenzoat erreicht werden. Gemäß der japanischen Offenlegungsschrift Sho 45-29 056 sollen verbesserte Antiblockeigenschaften bei guter Transparenz erhalten werden, durch Verwendung von Polymethylmethacrylat und/oder Polystyrol.

Durch die Verwendung dieser bekannten Antiblockmittel wird zwar eine Verbesserung des Antiblockverhaltens erreicht, jedoch weisen die damit ausgerüsteten Folien immer noch Nachteile hinsichtlich Reibung, Transparenz und Glanz auf.

Aufgabe der vorliegenden Erfindung war es daher, eine verbesserte Folie bereitzustellen.

Gegenstand der vorliegenden Erfindung ist eine wenigstens monoaxial gereckte Polypropylenfolie, enthaltend jeweils wenigstens ein Gleitmittel, ein Antistatikum und ein Antiblockmittel, dadurch gekennzeichnet, daß das Antiblockmittel polymerisierten Methacrylsäureisobutylester und Methacrylsäuremethylester enthält.

In einer bevorzugten Ausführungsform handelt es sich bei der Folie um eine transparente Folie. Bei transparenten Folien kommen die Vorteile des erfindungsgemäß zu verwendenden Antiblockmittels hinsichtlich Glanz besonders gut zum Tragen. Bei dem erfindungsgemäßen Antiblockmittel handelt es sich vorzugsweise um ein Copolymer oder einer Mischung aus polymerisiertem Methacrylsäureisobutylesterund Methacrylsäuremethylester. Vorzugsweise ist das Antiblockmittel vernetzt. Bei dem erfindungsgemäß zu verwendenden Antiblockmittel bewegt sich das molare Verhaltnis von Polymethacrylsäureisobutylester und Polymethacrylsäuremethylester im allgemeinen zwischen 1,2:1 bis 7,0:1, vorzugsweise von 1,2:1 bis 4,5:1, speziell von 1,9:1 bis 3,1:1.

Derartige Polymere können in bekannter Weise durch Polymerisation der Ausgangskomponenten erhalten werden.

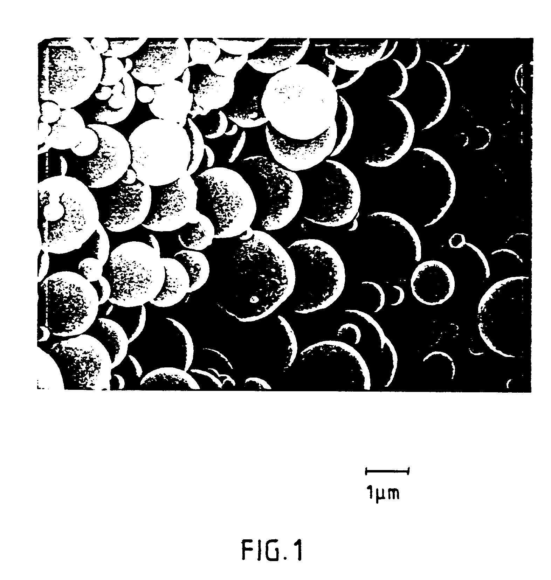

In einer bevorzugten Ausführungsform hat das erfindungsgemäß zu verwendende Antiblockmittel überwiegend kugelförmige oder elipsoide Form, insbesondere mit einer mittleren Teilchengröße von 0,5 bis 7 $\mu$m, insbesondere 0,7 bis 4 $\mu$m. Figur 1 zeigt eine mikroskopische Aufnahme eines derartigen Antiblockmittels.

In einer besonders bevorzugten Ausführungsform läßt sich die kugelförmige Gestalt des erfindungsgemäß zu verwendenden Antiblockmittels näherungsweise durch einen Formfaktor wie folgt erfassen:

$$\text{Formfaktor } f = \sqrt{\frac{A}{d^2_{max} \cdot \pi/4}}$$

Darin bedeuten:

A   Querschnittfsfläche eines Einzelteilchens, die den Schwerpunkt schneidet und zur Außenfläche orthogonal ist,

$d_{max}$   maximale Ausdehnung der Fläche A.

Die Teilchenform ist vollkommen rund, wenn der Formfaktor f = 1 ist. In einer bevorzugten Ausführungsform liegt der Formfäktor eines Einzelteilchens des erfindungsgemäßen Antiblockmittels vorzugsweise im Bereich von 0,9 ≤ f ≤ 1.

Das erfindungsgemäß zu verwendende Antiblockmittel ist vorzugsweise in einer Menge von 700 bis 5000, insbesondere 1500 bis 2400 ppm in der Polypropylenfolie enthalten.

Die erfindungsgemäßen Folien können ein- oder mehrschichtig sein, wobei im mehrschichtigen Fall immer die Außenschichten das erfindungsgemäße Additiv enthalten.

Bevorzugte Außenschichten sind Siegel- oder Kaschierschichten. Bevorzugte Zusammensetzungen für die Außenschichten sind Polypropylenhomopolymere oder Copolymere des Propylens mit Ethylen oder des Propylens mit Buten oder Ethylen und Buten, wobei im allgemeinen der Polypropylenanteil wenigstens 70 Gew.-% beträgt. Für das Polypropylen der Kern- und Außenschichten wird vorzugsweise ein isotaktisches Polypropylen mit einer Dichte von 0,9 bis 0,91 g/cm$^3$ und einem Schmelzflußindex von 1 bis 4 g/10 min bei 230°C/21,5 N (nach DIN 53 735) verwendet.

Die Basisschicht kann z.B. 3 bis 15 Gew.-%, vorzugsweise 8 bis 12 Gew.-% mit dem Polypropylen unverträgliche Additive, vorzugsweise anorganische Additive, wie Kalciumcarbonat, Siliciumdioxid, Natriumaluminiumsilikat und/oder Titandioxid enthalten, wodurch eine Opakisierung der Folie erreicht werden kann. Es kann aber auch ein organisches, unverträgliches Additiv fein verteilt in der Basisschicht enthalten sein, vorzugsweise Teilchen aus Polystyrol, Polymethylmethacrylat, Polytetrafluorethylen, Polycarbonat und/oder Copolymeren dieser Verbindungen. Unverträglichkeit bedeutet dabei, daß solche polymeren Additive einen anderen Schmelzpunkt und/oder ein anderes Streckverhältnis als das Polypropylen aufweisen, so daß es unter geeigneten Voraussetzungen beim biaxialen Orientierungsprozeß der Mehrschichtfolie zum Aufreißen der Polymermatrix und damit zu einer Vakuolenbildung kommt, die auch bei Verwendung anorganischer Additive auftritt. Dadurch kann eine Opakisierung der Folie auftreten.

In einer bevorzugten Ausführungsform weisen die Folien eine an sich bekannte Heißsiegelschicht auf, insbesondere Copolymere des Propylens.

Die Mehrschichtfolien können außerdem eine Gassperrschicht, vorzugsweise eine Sauerstoffsperrschicht aus einem verseiften Ethylen/Vinylacetat-Copolymerisat mit 40 bis 85 Mol-% Vinylacetateinheiten, die zumindestens zu 90 Gew.-%, vorzugsweise zu mehr als 96 Gew.-%, verseift sind, und gegebenenfalls übliche Haftvermittlerschichten enthalten. Die Herstellung solcher Ethylen/Vinylalkohol-Copolymerisate ist bekannt Ein weiterer Gegenstand der vorliegenden Erfindung sind daher auch heißsiegelbare Mehrschichtfolien, die eine geringe Gasdurchlässigkeit und einen hervorragenden Aromaschutz aufweisen.

Die erfindungsgemäß behandelten Mehrschichtfolien können auf einer Seite eine Thermokaschierschicht aus niedrigsiegelnden Polymeren tragen. Durch Zufuhr von Wärme und unter Druck kann eine solche Folie zunächst gegen andere Substrate heißkaschiert werden und anschließend mit der erfindungsgemäß vorbehandelten Seite verliebt und bedruckt werden.

Die Ausrüstung der Schichten der Folien mit weiteren üblichen Additiven und Hilfsmitteln, wie z.B. Gleitmitteln, Antiblockmitteln und Antistatika, in üblichen Mengen, ist möglich.

Bevorzugte Antistatika sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit 2 Hydroxyalkyl-($C_1$-$C_4$)-Gruppen substituiert sind, worunter N,N-Bis-(2-hydroxyethyl)-alkylamine mit $C_{10}$-$C_{20}$, vorzugsweise $C_{12}$-$C_{18}$ als Alkylgruppen besonders geeignet sind. Die wirksame Menge an Antistatikum liegt im Bereich von 0,05 bis 3 Gew.-%, bezogen auf die Schicht Im Falle des Einsatzes von polyethermodifiziertem Polysiloxan wird dieses nur dem Polymeren für die Basisschicht und/oder dem Polymeren jener der beiden Siegelschichten zugesetzt, die als Polydialkylsiloxan-inkorporierte Schicht vorgesehen ist

Geeignete weitere Antiblockmittel sind anorganische Zusatzstoffe wie Siliciumdioxid, Calciumcarbonat, Magnesiumsilikat, Aluminiumsilikat, Calciumphosphat und dergleichen, nichtionogene Tenside, anionaktive Tenside und/ oder unverträgliche organische Polymerisate, wie Polyamide, Polyester, Polycarbonate und dergleichen.

Beispiele für Gleitmittel sind höhere aliphatische Säureamide, höhere aliphatische Säureester, Wachse und Metallseifen. Die wirksame Menge an Gleitmittel liegt im Bereich von 0,1 bis 2 Gew.-%, bezogen auf die Schicht.

Als Stabilisatoren können die üblichen, stabilisierend wirkenden Verbindungen für Ethylen-, Propylen- und anderen α-Olefinpolymeren eingesetzt werden. Die wirksame Menge beträgt im allgemeinen 0,1 bis 2 Gew.-%, bezogen auf die Schicht

Bevorzugte Kombinationen von Additiven sind beispielsweise beschrieben in der EP-A-27 586 und der EP-A-263 882.

Die Folien können nach üblichen Verfahren wie Laminierung, Beschichtung oder Schmelz(co)extrusion produziert werden. Die Folien werden mindestens monoaxial, bevorzugt biaxial, gereckt Dabei wird die Längsreckung vorzugsweise im Verhältnis 5:1 bis 7:1 und die Querreckung im Verhältnis 7:1 bis 10:1 vorgenommen.

Die Polypropylenfolie hat vorzugsweise eine Dicke von 10 bis 50 μm.

Die erfindungsgemäße Folie kann ein- oder beidseitig in üblicher Weise vorbehandelt werden, insbesondere mit einer Corona-, Fluor- oder Plasmavorbehandlung. In einer bevorzugten Ausführungsform hat die Folie auf wenigstens einer Seite eine Heißkaschierschicht, insbesondere aus einem Ethylenvinylacetat-Copolymer und einem weiteren Copolymer, ausgewählt aus der Gruppe Ethylenmethylacrylat und Ethylen-Acrylsäure-Copolymer. Unter einer heißkaschierbaren Schicht wird hierbei eine Schicht verstanden, die infolge ihrer relativ großen Dicke geeignet ist, die Folie mit anderen Substraten wie Papier oder Karton zu verbinden, und zu Verbunden, wie Prospekt- und Bucheinbänden, Schallplattenhüllen und Kartonverpackungen zu verarbeiten.

Die erfindungsgemäßen Folien eignen sich wegen ihrer hervorragenden Gleiteigenschaften besonders für die Verarbeitung auf schnellaufenden Verpackungsmaschinen. Außerdem wird die Verarbeitung auf Trommel- und Tunnelkaschiermaschinen bei hohen Geschwindigkeiten ermöglicht

Wegen irrer vorzüglichen optischen Eigenschaffen eignen sich die erfindungsgemäß hergestellten Folien für die Folienkaschierung, insbesondere Glanzfolienkaschierung, graphische Produkte, wie Bucheinbände, Prospekteinbände, Buchhüllen, Schallplattenhüllen, Verpackungen etc.

Soweit es sich bei der erfindungsgemäßen Folie um eine Mehrschichtfolie handelt, wird das erfindungsgemäß zu verwendende Antiblockmittel vorzugsweise nur in den Außenschichten verwendet.

Beispiele:

Prüfmethoden

Zur Beurteilung der Gleitfähigkeit von Folien wird die Prüfvorschrift DIN 53 375 (Bestimmung des Reibverhaltens) herangezogen.

Die Reibungsmessung nach dieser Vorschrift dient zur Bestimmung des Verhaltens von Folien bei Reibung zweier Folien gegeneinander und der Reibung einer Folie gegen Metall.

Angegeben wird die Reibungszahl $\mu$.

Die optischen Eigenschaften werden durch Lichtmikroskopie mit Vergrößerungen 50:1 bis 150:1 der um die Antiblockmittel wahrend des Reckprozesses entstandenen Vakuolen beurteilt

Zur quantitativen Beurteilung der optischen Eigenschaften wird die Trübung nach ASTM D 1003 gemessen. Abweichend von der Prüfvorschrift wird die Folienprobe so positioniert, daß auch Streuwinkel <8° gemessen werden und damit auch größere Verunreinigungen bestimmt werden können.

Beispiel

Es wird eine Folie bestehend aus Polypropylen mit einer Dichte von 0,91 $g/cm^3$ und einem Schmelzindex von 3,3 g/10 min (230°C/21,6 N) hergestellt Die Folie wird zunächst 4,7- bis 5-fach längs und anschließend 9,2- bis 9,8-fach gereckt. Die Foliendicke beträgt 15 $\mu$m. Die Folie ist beidseitig Corona-vorbehandelt

Neben Polypropylen enthält die Folie folgende Additivbestandteile:

0,1 Gew.-% eines Additivs, bestehend aus Polymethacrylsäureisobutylester und Polymethacrylsäuremethylester im Molverhältnis von 2,5:1

0,15 Gew.-% eines ethoxylierten Amins als Antistatikum

0,3 Gew.-% eines Erucasäureamid als Gleitmittel

Vergleichsbeispiel 1

Zum Vergleich wird eine Vergleichsfolie, wie im Beispiel erläutert, hergestellt.

Neben Polypropylen enthält die Folie folgende Rezepturbestandteile:

0,1 Gew.-% eines pulverförmigen Siliciumdioxids

0,15 Gew.-% eines ethoxylierten Amins

0,3 Gew.-% eines Erucasäureamids

Vergleichsbeispiel 2

Es wird eine weitere Vergleichsfolie nach dem im Beispiel erläuterten Verfahren hergestellt.

Neben Polypropylen enthält die Folie folgende Rezepturbestandteile

0,1 Gew.-% eines pulverförmigen Polymethylmethacrylats

0,15 Gew.-% eines ethoxylierten Amins

0,3 Gew.-% eines Erucasäureamids

| Vergleich | | |
|---|---|---|
| | Gleitfähigkeit Reibungszahl nach DIN 53 375 Folie/Folie | Optik Trübung ASTM D 1003 % |
| Beispiel | 0,20 | 0,6 |
| Vergleichsbeispiel 1 | 0,51 | 2,5 |
| Vergleichsbeispiel 2 | 0,60 | 1,3 |

**Patentansprüche**

1.  Wenigstens monoaxial gereckte Polypropylenfolie, enthaltend jeweils wenigstens ein Gleittmittel, ein Antistatikum und ein Antiblockmittel, dadurch gekennzeichnet, daß das Antiblockmittel polymerisierten Polymethacrylsäureisobutylester und Polymethacrylsäuremethylester enthält

2.  Folie nach Anspruch 1, dadurch gekennzeichnet, daß die Folie transparent ist.

3.  Folie nach wenigstens einem der vorhergehenden Ansprüche, dadurch gekennzeichnet, daß das molare Verhältnis von Polymethacrylsäureisobutylester und Polymethacrylsäuremethylester 1,2:1 bis 7,0:1 beträgt

4.  Folie nach wenigstens einem der vorhergehenden Ansprüche, dadurch gekennzeichnet, daß das Antiblockmittel in einer Menge von 700 bis 5000 ppm enthalten ist.

5.  Folie nach wenigstens einem der vorhergehenden Ansprüche, dadurch gekennzeichnet, daß das Antiblockmittel nahezu kugelförmig ist.

6.  Folie nach wenigstens einem der vorhergehenden Ansprüche, dadurch gekennzeichnet, daß es sich um eine Mehrschichtenfolie handelt, wobei das Antiblockmittel nur in einer oder beiden Außenschichten enthalten ist.

7.  Folie nach wenigstens einem der vorhergehenden Ansprüche, dadurch gekennzeichnet, daß sie eine Thermokaschier- oder Siegelschicht aufweist.

8.  Folie nach wenigstens einem der vorhergehenden Ansprüche, dadurch gekennzeichnet, daß das Antiblockmittel ein Copolymer aus polymerisierten Methacrylsäureisobutylester und Methacrylsäuremethylester ist.

9.  Folie nach wenigstens einem der vorhergehenden Ansprüche, dadurch gekennzeichnet, daß das Antiblockmittel vernetzt ist.

10. Folie nach wenigstens einem der vorhergehenden Ansprüche, dadurch gekennzeichnet, daß sie einer Corona-, Fluor- oder Plasmabehandlung unterzogen ist.

**Claims**

1.  An at least monoaxially stretched polypropylene film containing at least one lubricant, at least one antistatic agent and at least one antiblocking agent, characterized in that the antiblocking agent contains polymerized polyisobutyl methacrylate and polymethyl methacrylate.

2.  A film as claimed in claim 1, characterized in that it is transparent.

3.  A film as claimed in at least one of the preceding claims, characterized in that the molar ratio of polyisobutyl methacrylate to polymethyl methacrylate is 1.2:1 to 7.0:1.

4.  A film as claimed in at least one of the preceding claims, characterized in that the antiblocking agent is present in a quantity of 700 to 5,000 ppm.

5. A film as claimed in at least one of the preceding claims, characterized in that the antiblocking agent consists of substantially spherical particles.

6. A film as claimed in at least one of the preceding claims, characterized in that it is a multilayer film in which the antiblocking agent is only present in one or both outer layers.

7. A film as claimed in at least one of the preceding claims, characterized in that it comprises a heat-lamination or sealing layer.

8. A film as claimed in at least one of the preceding claims, characterized in that the antiblocking agent is a copolymer of polymerized isobutyl methacrylate and methyl methacrylate.

9. A film as claimed in at least one of the preceding claims, characterized in that the antiblocking agent is crosslinked.

10. A film as claimed in at least one of the preceding claims, characterized in that it is subjected to a corona, fluorine or plasma treatment.

## Revendications

1. Film de polypropylène étiré au moins de manière monoaxiale, contenant chaque fois au moins un lubrifiant, un agent antistatique et un agent antiadhésif, caractérisé en ce que l'agent antiadhésif contient de l'ester butylique d'acide méthacrylique et de l'ester méthylique d'acide polyméthacrylique.

2. Film selon la revendication 1, caractérise en ce que le film est transparent.

3. Film selon au moins une des revendications ci-dessus, caractérisé en ce que le rapport molaire entre l'ester isobutylique d'acide polyméthacrylique et l'ester méthylique d'acide polyméthacrylique est de 1,2:1 à 7,0:1.

4. Film selon au moins l'une des revendications ci-dessus, caractérisé en ce que l'agent antiadhésif est présent à raison d'une quantité de 700 à 5000 ppm.

5. Film selon au moins l'une des revendications ci-dessus, caractérisé en ce que l'agent antiadhésif présente une forme environ sphérique.

6. Film selon au moins l'une des revendications ci-dessus, caractérisé en ce qu'il s'agit d'un film multicouche, l'agent antiadhésif étant contenu dans une ou dans les deux couches extérieures.

7. Film selon au moins l'une des revendications ci-dessus, caractérisé en ce qu'il présente une couche de doublage appliquée à chaud ou une couche de scellement.

8. Film selon au moins l'une des revendications ci-dessus, caractérisé en ce que l'agent antiadhésif est un copolymère d'ester isobutylique d'acide méthacrylique et d'ester méthylique d'acide méthacrylique.

9. Film selon au moins l'une des revendications ci-dessus, caractérisé en ce que l'agent antiadhésif 7 est réticulé.

10. Film selon au moins l'une des revendications ci-dessus, caractérisé en ce qu'il a subi un traitement corona, un traitement au fluor ou un traitement au plasma.

1µm

FIG. 1